(19) Europäisches Patentamt
European Patent Office
Office européen des brevets

(11) EP 4 650 487 A1

(12) EUROPEAN PATENT APPLICATION

(43) Date of publication:
19.11.2025 Bulletin 2025/47

(51) International Patent Classification (IPC):
C25B 1/04 (2021.01)    C25B 15/029 (2021.01)
C25B 15/08 (2006.01)

(21) Application number: 24305757.7

(22) Date of filing: 16.05.2024

(52) Cooperative Patent Classification (CPC):
C25B 1/04; C25B 9/05; C25B 9/73; C25B 15/02;
C25B 15/029; C25B 15/08; C25B 15/083;
C25B 15/087

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: TotalEnergies OneTech
92400 Courbevoie (FR)

(72) Inventors:
• AYME-PERROT, David
92400 COURBEVOIE (FR)
• DUBOUIS, Nicolas
92400 COURBEVOIE (FR)

(74) Representative: Lavoix
2, place d'Estienne d'Orves
75441 Paris Cedex 09 (FR)

(54) A WATER ELECTROLYSIS PROCESS HAVING AN EXTENDED RANGE OF OPERATION AND RELATED INSTALLATION

(57) The process comprises:
- recovering a mixture of electrolyte and dioxygen from an anodic compartment (19B) and separating it in a dioxygen separator (60) to obtain a dioxygen stream and a dioxygen containing electrolyte stream;
- recovering a mixture of electrolyte and dihydrogen from an cathodic compartment (19A) and separating it in a dihydrogen separator (49) to obtain a dihydrogen stream and a dihydrogen containing electrolyte stream ;
- recirculating the dioxygen containing electrolyte stream and the dihydrogen containing electrolyte stream.

Upon detection of conditions susceptible of leading to a dioxygen to dihydrogen ratio greater than a safety OTH threshold in the cathodic compartment (19A) or/and to a dihydrogen to dioxygen ratio greater than a safety HTO threshold in the anodic compartment (19B), flushing dihydrogen in electrolyte fed to the or each cathodic compartment (19A), and/or flushing dioxygen in electrolyte fed to the or each anodic compartment (19B).

FIG.2

EP 4 650 487 A1

## Description

The present invention concerns a water electrolysis process, comprising:

- introducing an electrolyte containing water in at least an electrolyzer stack device comprising at least a cell having an anodic compartment containing an anode, a cathodic compartment containing a cathode and a separator separating the anodic compartment and the cathodic compartment;
- supplying an electric current between the anode and the cathode of the or each cell to electrolyze water within the or each cell, and produce dioxygen in the anodic compartment and dihydrogen in the cathodic compartment;
- recovering a mixture of electrolyte and dioxygen from the or each anodic compartment and separating the mixture of electrolyte and dioxygen in a dioxygen separator to obtain a dioxygen stream and a dioxygen containing electrolyte stream;
- recovering a mixture of electrolyte and dihydrogen from the or each cathodic compartment and separating the mixture of electrolyte and dihydrogen in a dihydrogen separator to obtain a dihydrogen stream and a dihydrogen containing electrolyte stream ;
- recirculating the dioxygen containing electrolyte stream and the dihydrogen containing electrolyte stream to form at least part of the electrolyte containing water introduced in the electrolyzer stack device.

Water electrolysis has been developed for decades. When water is subjected to an electrochemical driving force at least higher than 1.23 V at room temperature (298.15 K), the electrolysis reaction occurs, converting water molecules into dihydrogen and dioxygen.

The produced dihydrogen ($H_2$) and dioxygen ($O_2$) gas can be further utilized in various commercial and industrial applications. For example, dihydrogen can be a clean fuel and dioxygen can be used in medical services.

The water electrolysis process is carried out in a water electrolysis installation, which comprises an electrochemical device (the stack) with a balance of plant (or "process unit").

Electrolyzers are incorporated inside a water electrolysis installation to convert water into dihydrogen and dioxygen using an electrical current.

They generally comprise stacks of several electrochemical cells. In each cell, dihydrogen is produced at a negative electrode (cathode) separated by a membrane from the positive electrode (anode) where dioxygen is produced.

The water electrolysis process is in particular an alkaline electrolysis process in which a lye containing for example about 30% potassium hydroxide is flown into cells of the electrolyzer while a direct current is passed between the electrodes of each cell.

The reactions occurring at the electrodes are:

The HER (Hydrogen evolution reaction) at the cathode: $2 H_2O(l) + 2e^- \rightarrow H_2(g) + 2 OH^-(aq)$ The OER (Oxygen Evolution reaction) at the anode: $2 OH^-(aq) \rightarrow 1/2 O_2(g) + H_2O(l) + 2 e^-$

When the water electrolysis takes place in a stack, the production of mixtures of gas and electrolyte get out of the stack. The dihydrogen and dioxygen outlets of the stack are connected to gas separators to separate the respective gas and electrolyte. The dihydrogen is then generally purified by removing remaining water traces.

Downstream of the separators, two types of architectures are known in alkaline electrolysis.

The first type of architecture comprises two separate recirculation loops of electrolyte, one connected to the anodic compartments of the electrolyzer stacks, the other one connected to the cathodic compartments of the electrolyzer stacks. This approach avoids a mixing of the gases dissolved in electrolyte coming from the anodic compartments and from the cathodic compartments.

However, since water is consumed at the cathode and generated at the anode, a change/gradient in electrolyte concentration occurs within the electrolyzer stack. The concentration imbalance of the electrolyte streams is detrimental, as it causes efficiency losses in the electrolyzer performance and/or lifetime degradation.

Consequently, in a second type of architecture, the recycled electrolytes are usually mixed together to balance the concentration gradients. The electrolyte concentration is thus balanced, but dihydrogen and dioxygen are both present in the recycled electrolyte.

The inflammability range of the gas mixture of dioxygen and dihydrogen is very large (4% to 75% of dihydrogen in dioxygen). In some instances, the mixing of these two gases can lead to catastrophic explosions susceptible of causing material and/or human damages.

In addition, gas crossover can occur across the membrane allowing a further mix of the two gases. Gas crossover, which is due to gas transport through the membrane, may also create safety concerns, reduce both the dihydrogen quality and the energy efficiency, and limit the operational power range.

The crossover rate is not varying much with the current density because it is proportional to the dissolved quantity of gas which is itself dependent on the partial pressure of the gas. Each compartment of the electrolyzer is saturated in dioxygen and/or in dihydrogen (in the presence of bubbles) and the concentration of dissolved gas is always close to the solubility limit.

At high current densities, the gas flow which crosses the membrane is negligible compared to the amount of gas generated at each electrode. On the contrary, at low current densities, the dihydrogen passing from the cathodic compartment to the anodic compartment becomes significant relative to the dioxygen produced.

The anodic dihydrogen to dioxygen ratio (HTO) thus increases. Similarly, the cathodic dioxygen to dihydrogen (OTH) ratio increases.

In operation, an electrolyzer stack is generally shut down when the dihydrogen to dioxygen ratio reaches a level of 2%, knowing that a dihydrogen to dioxygen ratio of 4% is the low ignition threshold.

The buildup of dihydrogen concentration in the anodic compartment at low current densities can be encountered in electrolysis installation powered by renewable resources, where the current density provided to the electrolyzers significantly varies depending on the atmospheric conditions. Such installations must be temporarily stopped when the current density decreases beyond a turndown threshold, leading to an overall loss in production and increase of dihydrogen production cost.

One aim of the invention is thus to provide a water electrolysis process which can be operated safely in a very large range of current densities applied to the electrolyzer stack.

To this aim, the subject matter of the invention is a water electrolysis process, characterized by, upon detection of conditions susceptible of leading to a dioxygen to dihydrogen ratio greater than a safety OTH threshold in electrolyte circulating in the or each cathodic compartment or/and to a dihydrogen to dioxygen ratio greater than a safety HTO threshold in electrolyte circulating in the or each anodic compartment, flushing dihydrogen in electrolyte fed to the or each cathodic compartment, and/or flushing dioxygen in electrolyte fed to the or each anodic compartment.

The process according to the invention may comprise one or more of the following figures, taken solely, or according to any technical feasible combination:

- detecting the conditions using a sensor set connected to a controller and activating, using the controller, a gas flushing system to carry out the flushing of dihydrogen in electrolyte fed to the or each cathodic compartment, and/or the flushing of dioxygen in electrolyte fed to the or each anodic compartment;
- the conditions comprise a ratio of the current or current density provided to the electrochemical stack device to a maximum current or current density which can be provided to the electrochemical stack device being smaller than a predefined turndown ratio;
- the conditions comprise a dioxygen to dihydrogen ratio or a dihydrogen to dioxygen ratio reaching a given fraction of respectively the safety OTH threshold and the safety HTO threshold;
- flushing dioxygen in the electrolyte fed to the or each anodic compartment comprises calculating with a calculator a flowrate of dioxygen to add in the electrolyte fed to the or each anodic compartment using a predefined minimal safe dioxygen flow produced in the or each anodic compartment and a present measured or calculated dioxygen flow produced in the or each anodic compartment, and/or flushing dihydrogen in the electrolyte fed to the or each cathodic compartment comprises calculating with the calculator a flowrate of dihydrogen to add in the electrolyte fed to the or each cathodic compartment using a predefined minimal safe dihydrogen flow produced in the or each cathodic compartment and a present measured or calculated dihydrogen flow produced in the or each cathodic compartment;
- the dioxygen flush flow rate to be added in the electrolyte entering the or each anodic compartment is calculated according to the following equation:

$$QflushO2(i) = alphaO2 \times (QrefO2-QO2(i)) \quad (1)$$

with QrefO2 being the dioxygen flow supposed to leave the electrolyzer stack device when operated at a current or current density corresponding to a turndown ratio of the electrolyzer stack device, QO2(i) being the dioxygen flow expected at the current i supplied between the anode and the cathode of the or each cell, calculated according to Faraday's law and alphaO2 is a real number between 0.5 and 1

and/or wherein the dihydrogen flush flow rate to be added in the electrolyte entering the or each cathodic compartments is calculated according to the following equation:

$$QflushH2(i) = alphaH2 \times (QrefH2-QH2(i)) \quad (2)$$

with QrefH2 being the dihydrogen flow supposed to leave the electrolyzer stack device when operated at the current or current density corresponding to the turndown ratio of the electrolyzer stack device, QH2(i) being the dihydrogen flow expected at the current i between the anode and the cathode of the or each cell, calculated according to Faraday's law and alphaH2 is a real number between 0.5 and 1;

- the conditions comprise a shutdown phase of the electrolyzer stack device, the process comprising the application of an electric tension between the anode and the cathode of the or each cell by a battery buffer;

- flushing dioxygen in the electrolyte fed to the or each anodic compartment comprises sampling a part of the dioxygen stream obtained after separation in the dioxygen separator and reintroducing the part of the dioxygen stream in the electrolyte in the electrolyte fed to the or each anodic compartment or/and flushing dihydrogen in electrolyte fed to the or each cathodic compartment comprises sampling a part of the dihydrogen stream obtained after separation in the dihydrogen separator and reintroducing the part of the dihydrogen stream in the electrolyte fed to the or each cathodic compartment;

- recirculating the dioxygen containing electrolyte stream and the dihydrogen containing electrolyte stream comprises pumping with at least a pump to the electrolyzer stack device:

    - the dihydrogen containing electrolyte,
    - the dioxygen containing electrolyte or/and
    - a mixed electrolyte stream obtained from mixing the dihydrogen containing electrolyte and from the dioxygen containing electrolyte,

    the part of the dihydrogen stream being reintroduced in the electrolyte downstream of the or each pump and/or the part of the dioxygen stream being reintroduced in the electrolyte downstream of the or each pump;

- purifying the dioxygen stream obtained from the dioxygen separator in an dioxygen purifying stage, the sampling of the part of the dioxygen stream being carried out downstream of the dioxygen separator and upstream of the dioxygen purifying stage and/or purifying the dihydrogen stream obtained from the dioxygen separator in an dihydrogen purifying stage stream obtained from the dihydrogen separator, the sampling of the part of the dihydrogen stream being carried out downstream of the dihydrogen separator and upstream of the dihydrogen purifying stage;

- the dioxygen containing electrolyte and the dihydrogen containing electrolyte are separately reintroduced in the electrolyzer stack device, without being mixed one with another, to feed respectively the of each anodic compartment and the or each cathodic compartment, the flushed dioxygen being introduced in the dioxygen containing electrolyte, the flushed dihydrogen being introduced in the dihydrogen containing electrolyte;

- the dioxygen containing electrolyte and the dihydrogen containing electrolyte are mixed to form a mixed electrolyte stream introduced in the or each anodic compartment and in the or each cathodic compartment through a distributor comprising for the or each anodic compartment a separate anodic feed and for the or each cathodic compartment a separate cathodic feed, the flushed dioxygen being introduced in the or each separate anodic feed, the flushed dihydrogen being introduced in the or each separate cathodic feed;

- the water electrolysis is an alkaline water electrolysis, the electrolyte comprising an aqueous alkaline solution.

The invention also concerns an installation comprising:

- at least an electrolyzer stack device having at least an inlet to introduce an electrolyte containing water, the or each electrolyzer stack device comprising at least a cell having an anodic compartment containing an anode, a cathodic compartment containing a cathode and a separator separating the anodic compartment and the cathodic compartment;

- an electric current supply to the anode and the cathode of the or each cell to electrolyze water within the or each cell, and produce dioxygen in the anodic compartment and dihydrogen in the cathodic compartment;

- a dioxygen containing electrolyte recovery pipe to recover a mixture of electrolyte and dioxygen from the or each anodic compartment and a dioxygen separator to separate the mixture of electrolyte and dioxygen and to obtain an dioxygen stream and an dioxygen containing electrolyte stream;

- a dihydrogen containing electrolyte recovery pipe to recover a mixture of electrolyte and dihydrogen from the or each cathodic compartment and a dihydrogen separator to separate the mixture of electrolyte and dihydrogen and to obtain a dihydrogen stream and a dihydrogen containing electrolyte stream;

- at least a recycle pipe recirculating the dioxygen containing electrolyte stream and the dihydrogen containing electrolyte stream to form at least part of the electrolyte containing water introduced in the electrolyzer stack device,

characterized by a controller configured to, upon detection of conditions susceptible of leading to a dioxygen to dihydrogen ratio greater than a OTH safety threshold in electrolyte circulating in the or each cathodic compartment or/and to a dihydrogen to dioxygen ratio greater than a safety HTO threshold in electrolyte circulating in the or each anodic compartment, activate a flushing of dihydrogen in electrolyte fed to the or each cathodic compartment and/or activate a flushing of dioxygen in electrolyte fed to the or each anodic compartment.

The installation according to the invention may comprise one or more of the following features, taken solely, or according to any technical feasible combination:

- a dihydrogen flushing circuit controlled by the controller, the dihydrogen flushing circuit being tapped downstream of the dihydrogen separator and configured to inject a part of the dihydrogen stream in the electrolyte to be fed to the or each cathodic compartment, and/or an dioxygen flushing circuit controlled by the controller, the dioxygen flushing circuit being tapped downstream of the dioxygen separator and configured to inject a part of the dioxygen stream in the electrolyte to be fed to the or each anodic compartment.

The invention will be better understood, based on the following description, given solely as an example, and made in reference to the appended drawings, in which:

- [Fig.1] Figure 1 is a schematic representation of a first water electrolysis installation to carry out a first water electrolysis process according to the invention;
- [Fig.2] Figure 2 is a schematic representation of details of the installation of figure 1 showing a dioxygen flushing circuit to inject dioxygen in the electrolyte fed to the anodic compartments and a dihydrogen flushing circuit to inject dihydrogen in the electrolyte fed to the cathodic compartments;
- [Fig.3] Figure 3 is a schematic sectional view of an electrolyzer cell (i) under a high current density, (ii) under a low current density before implementing a dioxygen flushing in the electrolyte fed to the anodic compartment, and (iii) under a low current density after implementing the dioxygen flushing in the electrolyte fed to in the anodic compartment, in the process according to the invention ;
- [Fig.4] Figure 4 is a view similar to figure 2, where the installation comprises separate anolyte and catholyte recycling circuits, the flushing system being configured to inject dioxygen in the anolyte recycling circuit and dihydrogen in the catholyte recycling circuit.

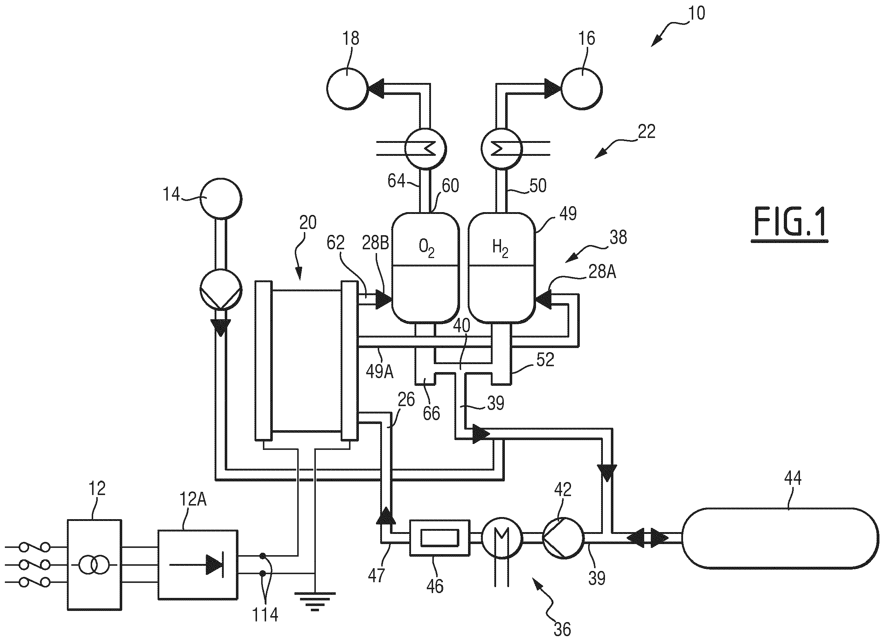

A first water electrolysis process according to the invention is carried out in a water electrolysis installation 10, schematically shown in figure 1.

The installation 10 is connected to an electric source 12, advantageously via a rectifier 12A, and to a water source 14, for the production of dihydrogen 16 and dioxygen 18.

In the embodiment of figure 1, the water electrolysis installation 10 is carrying out alkaline water electrolysis using an electrolyte based on a lye comprising for example potassium hydroxide.

The electric source 12 is for example a renewable energy source, such as a solar farm, a tidal farm or a wind farm, or is a battery system, a power grid or any device supplying electricity.

The installation 10 comprises at least an electrochemical stack device 20, where the electrochemical reactions take place, and a balance of plant 22 connected to the electrochemical stack device 20. The balance of plant 22 comprises various fluid handling components, including pipes, reservoirs, tanks, separators which will be described below.

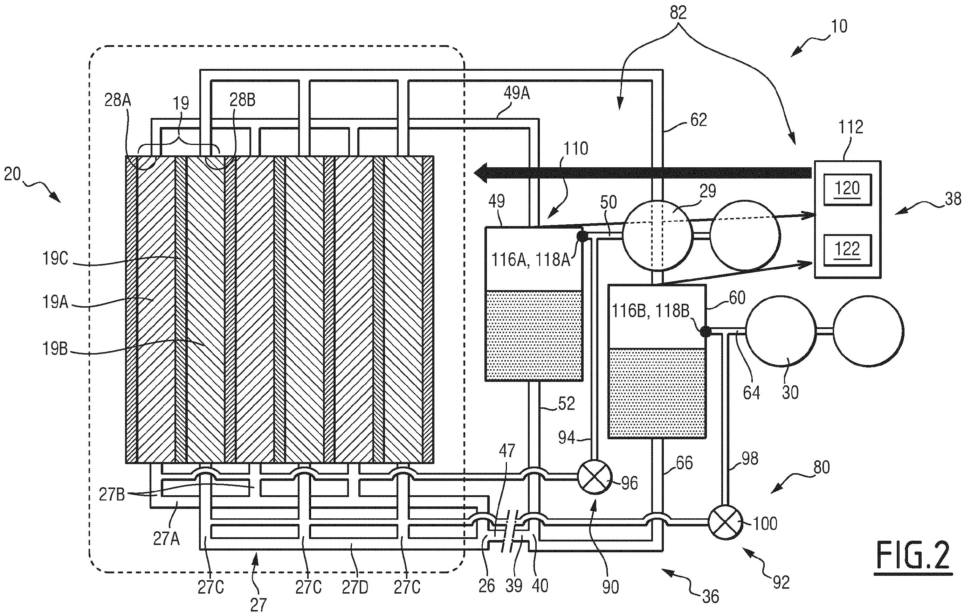

The balance of plant 22 is configured to convey at least an incoming electrolyte 26 (see figure 2) to an inlet of the electrochemical stack device 20 and to recover outcoming fluids 28A, 28B from outlets of the electrochemical stack device 20.

The electrochemical stack device 20 comprises at least one electrochemical cell 19, a frame receiving the or each electrochemical cell 19 and an outer enclosure containing the frames (not shown).

Each cell 19 comprises at least two electrodes, respectively an anode and a cathode, immersed in an electrolyte. The two electrodes are separated by at least one or more separator 19C. The cells 19 are for example arranged in rows defining a stack.

The cathode is contained in a cathodic compartment 19A where the dihydrogen is produced. The anode is contained in an anodic compartment 19B where the dioxygen is produced.

Water electrolysis takes place by providing electrolyte in each anodic compartment 19B of each cell 19 (the electrolyte being then referred to as "anolyte") and in each cathodic compartment 19A of each cell 19 (the electrolyte being then referred to as "catholyte") and by providing an electric current from the source 12 between the cathode and the anode of each cell 19.

The separator 19C comprises at least a membrane that limits fluids present in each compartment 19A, 19B, in particular dihydrogen and dioxygen produced at each electrode, to contact each other. The separator 19C is an electron insulator to prevent short-circuits.

In the case of alkaline electrolysis, the membrane is generally a polymer membrane, for example a PVDF membrane or a composite material made of a polymer material and of an inorganic material (for example polysulfone and zirconia), or asbestos.

Each cell 19 receives a supply of electric current from the electric source 12 through the rectifier 12A and a current distributor (not shown). It also receives the electrolyte through a fluid distributor 27.

In the example of figure 2, the fluid distributor 27 comprises an upstream common cathodic feed 27A, common to several cells 19 and several individual downstream cathodic feeds 27B, each connecting the upstream common cathodic feed 27A to an individual cathodic compartment 19A of a cell 19.

The fluid distributor 27 also comprises an upstream common anodic feed 27D, common to several cells 19 and several individual downstream anodic feeds 27C, each connecting the upstream common anodic feed 27D to an individual anodic compartment 19B of a cell 19.

In the example of figure 2, the upstream feeds 27A, 27D are configured to transport a mixed electrolyte, which is distributed in both the anodic compartments 19B and the cathodic compartments 19A of each cell 19.

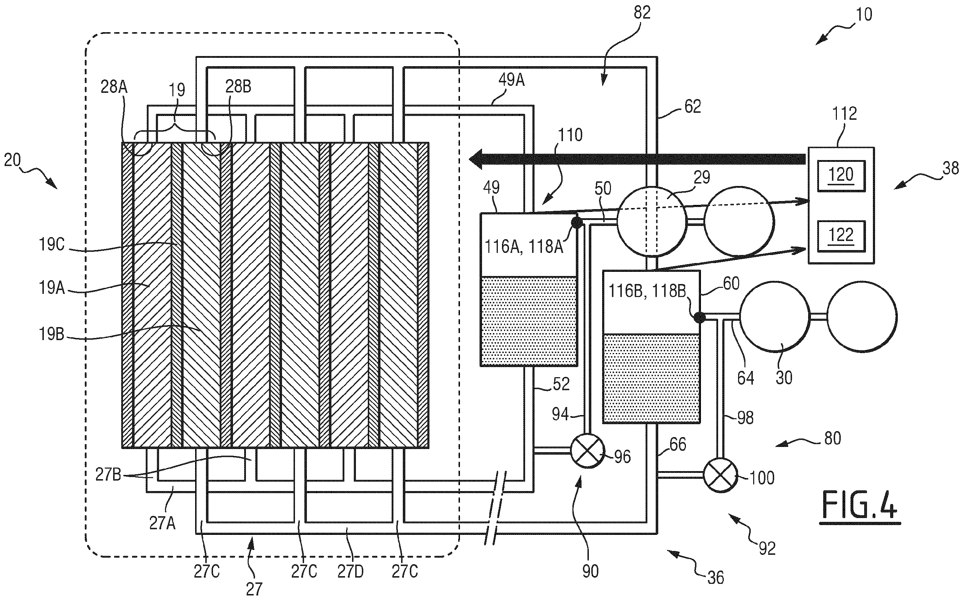

In a variant which will be described below in view of figure 4, the upstream common anodic feed 27D and the upstream common cathode feed 27A receive exclusively electrolyte recycled respectively from the outcoming fluid 28A produced in the cathodic compartments 19A and from the outcoming fluid 28B produced in the anodic compartments 19B.

Outcoming fluids 28A, 28B, here respectively electrolyte containing dihydrogen and electrolyte containing dioxygen are gathered respectively from the cathodic compartments 19A and from the anodic compartment 19B of the cells 19 and are recovered outside the enclosure.

The enclosure thus defines at least an incoming electrolyte 26 supply inlet and at least two outcoming fluid 28A, 28B recovery outlets, through which it is connected to the balance of plant 22.

The balance of plant 22 imports water from the water source 14 to the water electrolysis installation 10 to refresh and supply electrolyte to the electrochemical stack device 20 and exports dihydrogen 16 and dioxygen 18 produced in the electrochemical stack device 20 outside of the water electrolysis installation 10.

Advantageously, the balance of plant 22 also comprises a downstream dihydrogen purification stage 29 and if needed, a dioxygen purification stage 30 which are visible in figure 2.

The balance of plant 22 comprises an upstream circuit 36 to prepare and feed incoming electrolyte 26 to the electrochemical stack device 20, and a downstream circuit 38 to recover and treat outcoming fluids 28A, 28B produced in the electrochemical stack device 20 and recycle electrolyte to the upstream circuit 36.

The upstream circuit 36 comprises an upstream recycled electrolyte supply pipe 39 connected to the fresh water source 14, and a tapping 40 connected to the recycle electrolyte supply pipe 39 to receive recycled electrolyte from the downstream circuit 38.

The upstream circuit 36 further comprises an electrolyte tank 44 in which electrolyte is prepared from water supplied by the water source and stored, and a downstream electrolyte supply pipe 47 connecting the electrolyte tank 44 to the incoming electrolyte 26 inlet of the electrochemical stack device 20.

The upstream circuit 36 here comprises a pump 42 and advantageously, an electrolyte filter 46, in particular a lye filter, interposed on the downstream electrolyte supply pipe 47 between the electrolyte tank 44 and the incoming electrolyte inlet of the electrochemical stack device 20.

The electrolyte tank 44 is a tank containing a concentrated electrolyte solution. The electrolyte is for example a potassium hydroxide solution with a concentration greater than 0.1 mol per liter of electrolyte or an alkali-hydroxide solution ($NaOH$, $LiOH$, $CsOH$) with a concentration greater than 0.1 mol per liter of electrolyte or the mixture of a solution of alkali hydroxide with a concentration greater than 0.1 mol per liter and an additive such as vanadium oxide ($V2O5$) for example with a concentration greater than 1 g per liter.

The electrolyte filter 46 is configured to filter the electrolyte to remove solids, such as lye precipitates, from the electrolyte. The filter is for example a Y-filter mounted with a sieve with a pore size less than 10 micrometers.

The downstream circuit 38 connects the outcoming fluids 28A, 28B outlets of the electrochemical stack device 20 to a recovery of dihydrogen 16 and dioxygen 18 in gaseous state.

It comprises a dihydrogen separator 49 and a dihydrogen containing outcoming fluid recovery pipe 49A connecting the outcoming fluid 28A outlet of the electrochemical stack device 20 to the dihydrogen separator 49.

The dihydrogen separator 49 is a gas/liquid separator configured to separate the outcoming fluid 28A into gaseous dihydrogen 16 and electrolyte to be recycled.

The downstream circuit 38 hence comprises a dihydrogen recovery pipe 50 and a first electrolyte recycle pipe 52 tapped from the dihydrogen separator 49.

The first recycle electrolyte pipe 52 is connected to the recycled electrolyte supply pipe 39.

The downstream circuit 38 also comprises a dioxygen separator 60 and a dioxygen containing outcoming fluid recovery pipe 62 connecting the outcoming fluid 28B outlet of the electrochemical stack device 20 to the dioxygen separator 60.

The dioxygen separator 60 is a gas/liquid separator configured to separate the outcoming fluid 28B into gaseous dioxygen 18 and electrolyte to be recycled.

The downstream circuit 38 hence comprises a dioxygen recovery pipe 64 and a second electrolyte recycle pipe 66 tapped from the dioxygen separator 60.

In the example of figures 1 and 2, the first electrolyte recycle pipe 52 and the second electrolyte recycle pipe 66 merge at the tapping 40, defining a mixing region in which a mixed electrolyte is formed. The upstream recycled electrolyte supply pipe 39 thus forms a recombination zone in which the mixed electrolyte flows to the downstream recycled electrolyte supply pipe 47.

As shown in figure 2, the water electrolysis installation 10 further comprises a gas flushing system 80 and a sensing and control system 82 configured to operate the electrochemical stack device 20 and the gas flushing system 80.

The gas flushing system 80 comprises a dihydrogen flushing circuit 90 configured to introduce dihydrogen in electrolyte fed to the cathodic compartments 19A upon detection of conditions susceptible of leading to a dioxygen to dihydrogen ratio greater than a safety dioxygen to dihydrogen (OTH) threshold in the electrolyte fed to the cathodic compartments 19A.

The gas flushing system 80 further comprises a dioxygen flushing circuit 92 configured to introduce dioxygen in electrolyte fed to the anodic compartments 19B upon detection of conditions susceptible of leading to a dihydrogen to dioxygen ratio greater than a dihydrogen to dioxygen (HTO) safety threshold in the electrolyte fed to the anodic compartments 19B.

The dihydrogen flushing circuit 90 comprises at least a dihydrogen flush pipe 94 which is tapped downstream of the dihydrogen separator 49, preferably on the dihydrogen recovery pipe 50, and at least a dihydrogen flush control valve 96 mounted on the dihydrogen flush pipe 94 to control the flow rate of dihydrogen circulating in the dihydrogen flush pipe 94.

The dihydrogen flush pipe 94 is here tapped between the dihydrogen separator 49 and the dihydrogen purification stage 29, upstream of the purification stage 29, on the dihydrogen recovery pipe 50. The dihydrogen flush pipe 94 emerges preferably in each individual downstream cathodic feed 27A of the fluid distributor 27 to provide a dihydrogen flush in the electrolyte fed to each of the cathodic compartments 19A.

The dihydrogen flush control valve 96 is advantageously piloted by the sensing and control system 82, to control the flowrate of dihydrogen flushed into each cathodic feed 27C.

The dioxygen flushing circuit 92 comprises at least a dioxygen flush pipe 98 tapped downstream of the dioxygen separator 60, and a dioxygen flush control valve 100 mounted on the dioxygen flush pipe 98 to control the flow rate of dioxygen circulating in the dioxygen flush pipe 98.

The dioxygen flush pipe 98 is here tapped between the dioxygen separator 60 and the dioxygen purification stage 30 when present, upstream of the dioxygen purification stage 30. The dioxygen flush pipe 98 emerges downstream into each individual anodic feed 27B of the fluid distributor 27 to provide dioxygen in the electrolyte fed to each of the anodic compartments 19B.

The dioxygen flush control valve 100 is advantageously piloted by the sensing and control system 82, to control the dioxygen flowrate provided to each anodic feed 27B.

The sensing and control system 82 comprises a set of sensors 110, and at least one controller unit 112 connected to the set of sensors 110 to control the operation of the water electrolysis installation 10.

The set of sensors 110 in particular comprises a current sensor 114 (see figure 1) configured to measure the current provided to the electrochemical stack device 20 by the electric source 12.

It further comprises gas sensors comprising at least one dioxygen sensor 116A and one dihydrogen sensor 118A to define the dioxygen to dihydrogen ratio in the outcoming fluid 28A recovered from the cathodic compartments 19A in the dihydrogen containing outcoming fluid recovery pipe 49A, and at least one dihydrogen sensor 116B and one dioxygen sensor 118B to define the dihydrogen to dioxygen ratio in the outcoming fluid 28B in the dioxygen containing recovery pipe 62.

The sensors 116A, 118A; 116B, 118B are located at the outlet of each separator: at the outlet of the dihydrogen separator 49, and at the outlet of the dioxygen separator 60.

The controller unit 112 comprises at least a first controller 120 to control the current or current density supply to the electrochemical stack device 20 using data measured by the current sensor 114, and/or gas ratio data measured from data measured by gas sensors 116A, 118A; 116B, 118B.

The controller unit 112 comprises at least a second controller 122, configured to control the dihydrogen flush control valve 96 and the dioxygen flush control valve 100 to activate the dihydrogen and dioxygen flushes upon detection of conditions susceptible of leading respectively to a dioxygen to dihydrogen ratio and to a dihydrogen to dioxygen ratio greater than a respective threshold in the electrolytes fed respectively in the cathodic compartment 19B and in the anodic compartment 19A.

Each of the first controller 120 and of the second controller 122 comprises a computer having at least a processor and at least a memory containing software modules configured to be executed by the processor. In a variant, the computer comprises at least a Field Programmable Gate Array ("FPGA") or at least an Application Specific Integrated Circuit ("ASIC").

The first controller 120 is configured to receive current data from the current sensor 114, to receive data from gas sensors 116A, 118A; 116B, 118B and to determine dioxygen to dihydrogen ratio data from the sensors 116A, 118A and dihydrogen to dioxygen ratio data from the sensors 118B, 116B.

When the dioxygen to dihydrogen ratio measured by sensors 116A, 118A is greater than a safety OTH threshold, for example greater than 10%, the first controller 120 is configured to shutdown the electrochemical stack device 20 by nullifying the current or current density provided to the electrochemical stack device 20.

When the dihydrogen to dioxygen ratio measured by sensor 118 is greater than a HTO safety threshold, for example greater than 2%, the first controller 120 is configured to shutdown the electrochemical stack device 20 by nullifying the current or current density provided to the electrochemical stack device 20.

The second controller 122 is configured to receive data from gas sensors 116A, 118A; 116B, 118B, and to determine dioxygen to dihydrogen ratio data from the sensors 116A, 118A and dihydrogen to dioxygen ratio data from the sensor 118B, 116B.

Based on this data, it is configured to detect conditions susceptible of leading to a dioxygen to dihydrogen ratio greater than the safety OTH threshold or/and a dihydrogen to dioxygen ratio greater than the safety HTO threshold.

These conditions may be detected when for example a ratio of the current or current density provided to the electrochemical stack device 20 to the maximum current or current density which can be provided to the electrochemical stack device 20, is smaller than a predefined turndown ratio.

The turndown ratio is a predefined ratio equal to the level of current or current density compared to the maximum current or current density which can be provided to the electrolyzer stack device 20, at which the electrolyzer stack should be turned down in the absence of gas flushing.

The turndown ratio is dependent on the mode of operation of the electrolyzer stack device 20, e.g. atmospheric vs under pressure, and the structure of the electrolyzer stack device 20, e.g. with or without gap. It is here defined as the ratio of current or current density versus maximum current or current density at which the HTO is greater than the safety HTO threshold, here 2%. It can be determined by carrying out regular calibrations.

In a variant, the conditions, which will lead to the activation of the gas flushing system 80, can be detected when a dioxygen to dihydrogen ratio measured by sensor 118B, 116B greater than a predetermined fraction of the OTH safety threshold (for example 50% of the OTH safety threshold) or/and can be detected when a predetermined dihydrogen to dioxygen ratio being greater than a predetermined fraction of the HTO safety threshold, (for example 50% of the HTO safety threshold).

When said conditions are detected, the second controller 122 is configured to pilot the dihydrogen flush control valve 96 and/or the dioxygen flush control valve 100 to let respectively dihydrogen and dioxygen flush respectively the electrolyte to be introduced in the cathodic compartments 19A and in the anodic compartments 19B to counter potential gases having crossed over the separator 19C.

Advantageously, the second controller 122 comprises a calculator configured to calculate a flush gas flowrate to be introduced in the electrolyte, using a theoretical gas flow rate supposed to leave the stack when operated at the current or current density corresponding to the turndown ratio and the gas flow rate expected at the measured current or current density.

The calculator is for example configured to calculate the dioxygen flush flow rate to be added in the electrolyte entering the anodic compartments 19B according to the following equation:

$$QflushO2(i) = alphaO2 \times (QrefO2 - QO2(i)) \quad (1)$$

with QrefO2 being the dioxygen gas flow supposed to leave the stack when operated at the current or current density corresponding to the turndown ratio, QO2(i) being the dioxygen gas flow of dioxygen expected at the current i provided by the source 12 (for example measured by sensor 114), according to Faraday's law, and alphaO2 is a real number between 0.5 and 1.

It is configured to calculate the dihydrogen flush flow rate to be added in the electrolyte entering the cathodic compartments 19B by the following equation:

$$QflushH2(i) = alphaH2 \times (QrefH2 - QH2(i)) \quad (2)$$

with QrefH2 being the dihydrogen gas flow supposed to leave the stack when operated at the current or current density corresponding to the turndown ratio, QH2(i) being the gas flow of dihydrogen expected at the current i provided by the source 12 (for example measured by sensor 114), according to the Faraday's law, and alphaH2 is a real number between 0.5 and 1.

In variant, the calculator of the second controller 122 is configured to calculate the fraction between the dioxygen to dihydrogen ratio obtained from data measured from the sensors 116A, 118A and the OTH safety threshold and to trigger the dihydrogen flush in the electrolyte fed to the cathodic compartments 19A when the fraction exceeds a predetermined fraction, e.g. 50% and/or is configured to calculate the fraction between the dihydrogen to dioxygen ratio obtained from data measured by sensors 118B, 116B and the HTO safety threshold and to trigger the dioxygen flush in the electrolyte fed to the anodic compartments 19B when the fraction exceeds a predetermined level, e.g.50%.

A water electrolysis process according to the invention will now be described.

Electrolyte is provided to the inlet of the electrochemical stack device 20 through the fluid distributor 27. The electrolyte comprises recycled electrolyte from the two separators 49, 60 provided by the first and second electrolyte recycle pipes 52, 66 and the upstream recycled electrolyte supply pipe 39.

The electrolyte also advantageously comprises fresh water provided by the water source 14 and/or fresh electrolyte supplied from the tank 44.

The electrolyte is conducted through the common upstream cathodic and anodic feeds 27A, 27D and then to the individual downstream cathodic and anodic feeds 27B, 27C to feed respectively the cathodic compartments 19A and the anodic compartments 19B of each electrolyzer cell 19.

An electrical current is simultaneously supplied to the electrochemical stack device 20 and electrochemical reactions, as described above, occur within the stacks of cells of the electrochemical stack device 20 to convert the electrolyte within the electrolyte within the cathodic compartments 19A (also referred to as "catholyte") and in the anodic compartments 19B (also referred to as "anolyte") to respective outcoming fluids 28A, 28B.

The outcoming fluids 28A, 28B from the electrochemical stack device 20 are respectively dihydrogen mixed with electrolyte arising from the cathodic compartments 19A and dioxygen mixed with electrolyte arising from the anodic compartments 19B.

The outcoming fluid 28A is conducted to the dihydrogen separator 49 through the outcoming fluid recovery pipe 49A. In the dihydrogen separator, dihydrogen in gas phase is separated from electrolyte to be recycled.

A dihydrogen stream is recovered from the dihydrogen separator 49 in the dihydrogen recovery pipe 50 and is transported to the purification stage 29 for further treatment and/or use.

The recycled electrolyte is then conveyed via the first electrolyte recycle pipe 52 to the tapping 40. The recycled electrolyte in the first electrolyte recycle pipe 52 has a reduced dihydrogen content in comparison with the outcoming fluid 28A. It is still saturated in dihydrogen.

Similarly, the outcoming fluid 28B is conducted to the dioxygen separator 60 through the outcoming fluid recovery pipe 62. In the dioxygen separator 60, dioxygen in gas phase is separated from electrolyte to be recycled.

A dioxygen stream is recovered from the dioxygen separator 60 in the dioxygen recovery pipe 64 and is advantageously transported to the dioxygen 18 purification stage 30 for further treatment and/or use, or to a vent.

The recycled electrolyte is then conveyed via the second electrolyte recycle pipe 66 to the tapping 40. The recycled electrolyte in the second electrolyte recycle pipe 66 has a reduced dioxygen content in comparison with the outcoming fluid 28B. It is still saturated in dioxygen.

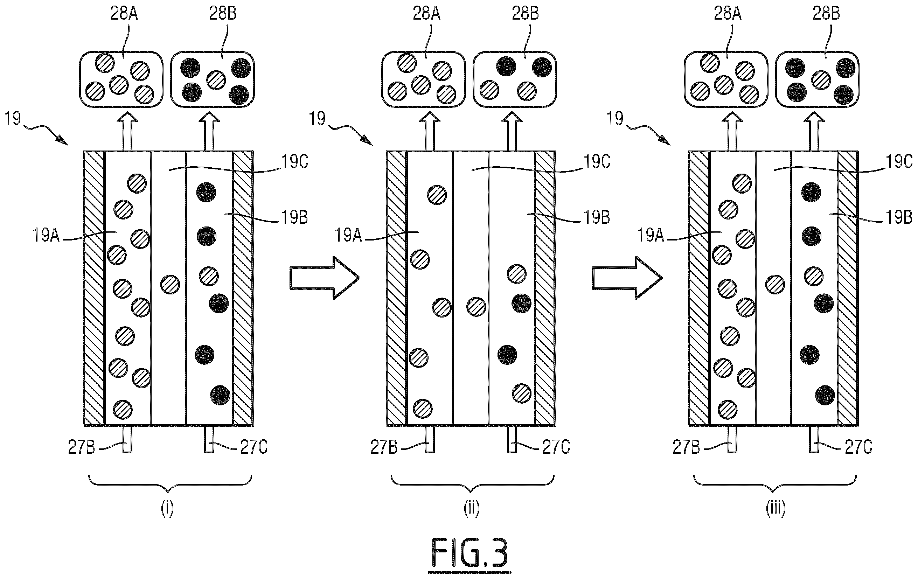

During operations at high current densities, i.e. at densities above the turndown ratio, the gas production at the cathode 19A and at the anode 19B is significant. It is much greater than gas crossover that could occur through the separator 19C, as shown in figure 3, scheme (i), where dioxygen molecules are shown as black circles whereas dihydrogen molecules are shown as grey circles.

The dioxygen to dihydrogen ratio in each cathodic compartment 19A thus remains very low, and below the OTH safety threshold.

The dihydrogen to dioxygen ratio in each anodic compartment 19B thus remains very low, and well below the safety HTO threshold.

When the current density provided to the electrochemical stack device 20 decreases, as shown in figure 3, scheme (ii), the gas crossover through the separator 19C remains substantially constant, because the electrolyte in the cathodic compartment 19A is still saturated in dihydrogen gas, even though the production of dihydrogen at the cathode has decreased.

As shown in figure 3, scheme (ii), the dihydrogen to dioxygen ratio in the anodic compartment 19B thus increases due to the dihydrogen crossover through the separator 19C. It also increases in the outcoming fluid 28B, in particular in the electrolyte containing dioxygen recovered at the recovery outlet 28B.

Similarly, the dioxygen to dihydrogen ratio in each cathodic compartment 19A increases due to the dioxygen crossover through the separator 19C. It also increases in the outcoming fluid 28A, in particular in the electrolyte containing dihydrogen recovered at the recovery outlet 28B.

The sensors 118B, 116B continuously detect data to determine the dihydrogen to dioxygen ratio in the outcoming fluid 28B, here at the inlet of the dioxygen separator 60.

The sensors 116A, 118A continuously detect data to determine the dioxygen to dihydrogen ratio in the outcoming fluid 28A, here at the inlet of the dihydrogen separator 49.

When the ratio of current or current density monitored by the second controller 122 to the maximum current or current density which can be provided to the electrochemical stack device 20 decreases below the turndown ratio, the controller 122 detects that the conditions susceptible of leading to a dioxygen to dihydrogen ratio greater than the safety OTH threshold or/and a dihydrogen to dioxygen ratio greater than the safety HTO threshold are met.

The controller 122 thus activates the dioxygen flushing circuit 92 by piloting the dioxygen flush control valve 100 to allow dioxygen from the dioxygen separator 60 located in the dioxygen recovery pipe 64, to be transported through the dioxygen flush pipe 98 up to each anodic feed 27C to be injected in the electrolyte fed to each anodic compartment 19B.

As shown on figure 3, scheme (iii), the provision of dioxygen in the electrolyte fed to each anodic compartment 19B dilutes the dihydrogen that has crossed over the separator 19C, leading to a decrease into the dihydrogen to dioxygen ratio in the anodic compartment 19B and downstream of the anodic compartment 19B.

Preferably, the flow rate of dioxygen which is derived through the dioxygen flush control valve 100 is controlled by the controller according to the above equation (1).

Similarly, the controller 122 advantageously activates the dihydrogen flushing circuit 90 by piloting the dihydrogen flush control valve 96 to allow dihydrogen from the dihydrogen separator 49 located in the dihydrogen recovery pipe 50, to be transported through the dihydrogen flush pipe 94 up to each cathodic feed 27B to be injected in the electrolyte fed to each cathodic compartment 19A.

The provision of dihydrogen in the electrolyte fed to each cathodic compartment 19A dilutes the dioxygen that has crossed over the separator 19C, leading to a decrease into the dioxygen to dihydrogen ratio in the cathodic compartment 19A and downstream of the cathodic compartment 19A.

Preferably, the flow rate of dioxygen which is derived through the dioxygen flush control valve 100 is controlled by the controller according to the above equation (2).

In a variant, the dihydrogen flushing circuit 90 and/or the dioxygen flushing circuit 92 are activated when the respective sensors 116A, 118A; , 116B, 118B detect respectively data leading to a dioxygen to dihydrogen ratio or a dihydrogen to dioxygen ratio, which reaches over a given fraction of respectively the safety OTH threshold and the safety HTO threshold, for example 50% of said safety threshold.

In another variant, the water electrolysis installation 10 is in a shutdown phase. The source 12 does not provide any current density to the electrochemical stack device 20.

Preferably, a battery buffer unit is connected to the electrochemical stack device 20 to maintain the electrochemical stacks under a low voltage, e.g. less than 1.4 V and preferably less than 1.2 V, which prevents reverse currents.

Since the voltage between the terminals of electrochemical stack is small, for example less than 1.2 V multiplied by the number of cells, the voltage distribution within the cells 19 of the electrochemical stack device 20 can be non-uniform. In some cells, conditions as defined above (as represented schematically in Figure 3, scheme (ii)) may be encountered.

As a counter measure, when the battery buffer unit is connected to the electrochemical stack device 20, the dihydrogen flushing circuit 90 and/or the dioxygen flushing circuit 92 are activated by the controller 122, as described above. The cells 19 remain under safe conditions, since gases that have potentially crossed over the separator 19C are diluted by the gas flush.

In another variant, an operator manually activates the dihydrogen flushing circuit 90 or/and the dioxygen flushing circuit 92.

In a variant shown in figure 4, the water electrolysis installation 10 comprises separate circuits to recycle the electrolyte respectively recovered in the dihydrogen separator 49 and in the dioxygen separator 60.

The water electrolysis installation 10 is thus without a recombination zone between the electrolytes recovered in each separator 49, 60.

Rather, the first electrolyte recycle pipe 52 is directly connected to the upstream cathodic feed 27A and the second recycle pipe 66 is directly connected to the upstream anodic feed 27D.

The dihydrogen flush pipe 94 directly emerges into the first electrolyte recycle pipe 52 and the dioxygen flush pipe 98 directly emerges into the second electrolyte recycle pipe 66.

The operation of the water electrolysis installation 10 shown in figure 4 is however similar to the operation of the installation shown in figure 3, in particular with an activation of gas flush when conditions susceptible of leading to a dioxygen to dihydrogen ratio greater than the safety OTH threshold or/and a dihydrogen to dioxygen ratio greater than the second safety HTO threshold are detected.

With the water electrolysis method according to the invention, it is thus possible to increase the range of operation of a water electrolysis installation 10, especially when the current or current density decreases, down to the predetermined turndown ratio of the electrolyzer stack device 20, or below it. The productivity of the water electrolysis installation 10 is thus significantly increased, while keeping its safety maximum.

The method according to the invention is also particularly beneficial during shutdown phases of the water electrolysis installation 10, in which a battery buffer can be added to maintain the electrolyzer stacks under a low voltage, in order to avoid reverse currents that would lead to accelerated aging. This can be done while ensuring an optimal safety, even if the voltage distribution in the cells 19 of the stack is not uniform.

**Claims**

1. A water electrolysis process, comprising:

    - introducing an electrolyte containing water in at least an electrolyzer stack device (20) comprising at least a cell (19) having an anodic compartment (19B) containing an anode, a cathodic compartment (19A) containing a cathode and a separator (19C) separating the anodic compartment (19B) and the cathodic compartment (19A);
- supplying an electric current between the anode and the cathode of the or each cell (19) to electrolyze water within the or each cell (19), and produce dioxygen in the anodic compartment (19B) and dihydrogen in the cathodic compartment (19A);
- recovering a mixture of electrolyte and dioxygen from the or each anodic compartment (19B) and separating the mixture of electrolyte and dioxygen in a dioxygen separator (60) to obtain a dioxygen stream and a dioxygen containing electrolyte stream;
- recovering a mixture of electrolyte and dihydrogen from the or each cathodic compartment (19A) and separating the mixture of electrolyte and dihydrogen in a dihydrogen separator (49) to obtain a dihydrogen stream and a dihydrogen containing electrolyte stream ;
- recirculating the dioxygen containing electrolyte stream and the dihydrogen containing electrolyte stream to form at least part of the electrolyte containing water introduced in the electrolyzer stack device (20),

**characterized by**, upon detection of conditions susceptible of leading to a dioxygen to dihydrogen ratio greater than a safety OTH threshold in electrolyte circulating in the or each cathodic compartment (19A) or/and to a dihydrogen to dioxygen ratio greater than a safety HTO threshold in electrolyte circulating in the or each anodic compartment (19B), flushing dihydrogen in electrolyte fed to the or each cathodic compartment (19A), and/or flushing dioxygen in electrolyte fed to the or each anodic compartment (19B).

2. The water electrolysis process according to claim 1, comprising detecting the conditions using a sensor set (110) connected to a controller (122) and activating, using the controller (122), a gas flushing system (80) to carry out the flushing of dihydrogen in electrolyte fed to the or each cathodic compartment (19A), and/or the flushing of dioxygen in electrolyte fed to the or each anodic compartment (19B).

3. The water electrolysis process according to claim 1 or 2, wherein the conditions comprise a ratio of the current or current density provided to the electrochemical stack device (20) to a maximum current or current density which can be provided to the electrochemical stack device (20) being smaller than a predefined turndown ratio.

4. The water electrolysis process according to any one of the preceding claims, wherein the conditions comprise a dioxygen to dihydrogen ratio or a dihydrogen to dioxygen ratio reaching a given fraction of respectively the safety OTH threshold and the safety HTO threshold.

5. The water electrolysis process according to any one of the preceding claims, wherein flushing dioxygen in the electrolyte fed to the or each anodic compartment (19B) comprises calculating with a calculator a flowrate of dioxygen to add in the electrolyte fed to the or each anodic compartment (19B) using a predefined minimal safe dioxygen flow produced in the or each anodic compartment (19B) and a present measured or calculated dioxygen flow produced in the or each anodic compartment (19B), and/or flushing dihydrogen in the electrolyte fed to the or each cathodic compartment (19A) comprises calculating with the calculator a flowrate of dihydrogen to add in the electrolyte fed to the or each cathodic compartment (19A) using a predefined minimal safe dihydrogen flow produced in the or each cathodic compartment (19A) and a present measured or calculated dihydrogen flow produced in the or each cathodic compartment (19A).

6. The water electrolysis process according to claim 5, wherein the dioxygen flush flow rate to be added in the electrolyte entering the or each anodic compartment (19B) is calculated according to the following equation:

$$QflushO2(i) = alphaO2 \times (QrefO2\text{-}QO2(i)) \quad (1)$$

with QrefO2 being the dioxygen flow supposed to leave the electrolyzer stack device (20) when operated at a current or current density corresponding to a turndown ratio of the electrolyzer stack device (20), QO2(i) being the dioxygen flow expected at the current i supplied between the anode and the cathode of the or each cell (19), calculated according to Faraday's law and alphaO2 is a real number between 0.5 and 1

and/or wherein the dihydrogen flush flow rate to be added in the electrolyte entering the or each cathodic compartments (19A) is calculated according to the following equation:

$$QflushH2(i) = alphaH2 \times (QrefH2\text{-}QH2(i)) \quad (2)$$

with QrefH2 being the dihydrogen flow supposed to leave the electrolyzer stack device (20) when operated at the current or current density corresponding to the turndown ratio of the electrolyzer stack device (20), QH2(i) being the dihydrogen flow expected at the current i between the anode and the cathode of the or each cell (19), calculated according to Faraday's law and alphaH2 is a real number between 0.5 and 1.

7. The water electrolysis process according to any one of the preceding claims, wherein the conditions comprise a shutdown phase of the electrolyzer stack device (20), the process comprising the application of an electric tension between the anode and the cathode of the or each cell (19) by a battery buffer.

8. The water electrolysis process according to any one of the preceding claims, wherein flushing dioxygen in the electrolyte fed to the or each anodic compartment (19B) comprises sampling a part of the dioxygen stream obtained after separation in the dioxygen separator (60) and reintroducing the part of the dioxygen stream in the electrolyte in the electrolyte fed to the or each anodic compartment (19B) or/and flushing dihydrogen in electrolyte fed to the or each cathodic compartment (19A) comprises sampling a part of the dihydrogen stream obtained after separation in the dihydrogen separator (49) and reintroducing the part of the dihydrogen stream in the electrolyte fed to the or each cathodic compartment (19A).

9. The water electrolysis process according to claim 8, wherein recirculating the dioxygen containing electrolyte stream and the dihydrogen containing electrolyte stream comprises pumping with at least a pump (42) to the electrolyzer stack device (20):

   - the dihydrogen containing electrolyte,
   - the dioxygen containing electrolyte or/and
   - a mixed electrolyte stream obtained from mixing the dihydrogen containing electrolyte and from the dioxygen containing electrolyte,

   the part of the dihydrogen stream being reintroduced in the electrolyte downstream of the or each pump (42) and/or the part of the dioxygen stream being reintroduced in the electrolyte downstream of the or each pump (42).

10. The water electrolysis process according to claims 8 to 9, comprising purifying the dioxygen stream obtained from the dioxygen separator (60) in an dioxygen purifying stage (30), the sampling of the part of the dioxygen stream being carried out downstream of the dioxygen separator (60) and upstream of the dioxygen purifying stage (30) and/or comprising purifying the dihydrogen stream obtained from the dioxygen separator (49) in an dihydrogen purifying stage (29) stream obtained from the dihydrogen separator (49), the sampling of the part of the dihydrogen stream being carried out downstream of the dihydrogen separator (49) and upstream of the dihydrogen purifying stage (29).

11. The water electrolysis process according to any one of the preceding claims, wherein the dioxygen containing electrolyte and the dihydrogen containing electrolyte are separately reintroduced in the electrolyzer stack device (20), without being mixed one with another, to feed respectively the of each anodic compartment (19B) and the or each cathodic compartment (19A), the flushed dioxygen being introduced in the dioxygen containing electrolyte, the flushed dihydrogen being introduced in the dihydrogen containing electrolyte.

12. The water electrolysis process according to any one of claims 8 to 10, wherein the dioxygen containing electrolyte and the dihydrogen containing electrolyte are mixed to form a mixed electrolyte stream introduced in the or each anodic compartment (19B) and in the or each cathodic compartment (19A) through a distributor (27) comprising for the or each anodic compartment (19B) a separate anodic feed (27C) and for the or each cathodic compartment (19A) a separate cathodic feed (27B), the flushed dioxygen being introduced in the or each separate anodic feed (27C), the flushed dihydrogen being introduced in the or each separate cathodic feed (27B).

13. The water electrolysis process according to any one of the preceding claims, wherein the water electrolysis is an alkaline water electrolysis, the electrolyte comprising an aqueous alkaline solution.

14. A water electrolysis installation (10) comprising :

   - at least an electrolyzer stack device (20) having at least an inlet to introduce an electrolyte containing water, the or each electrolyzer stack device (20) comprising at least a cell (19) having an anodic compartment (19B) containing an anode, a cathodic compartment (19A) containing a cathode and a separator (19C) separating the anodic compartment (19B) and the cathodic compartment (19A);

- an electric current supply to the anode and the cathode of the or each cell (19) to electrolyze water within the or each cell (19), and produce dioxygen in the anodic compartment (19B) and dihydrogen in the cathodic compartment (19A);

- a dioxygen containing electrolyte recovery pipe (62) to recover a mixture of electrolyte and dioxygen from the or each anodic compartment (19B) and a dioxygen separator (60) to separate the mixture of electrolyte and dioxygen and to obtain an dioxygen stream and an dioxygen containing electrolyte stream;

- a dihydrogen containing electrolyte recovery pipe (49A) to recover a mixture of electrolyte and dihydrogen from the or each cathodic compartment (19A) and a dihydrogen separator (60) to separate the mixture of electrolyte and dihydrogen and to obtain a dihydrogen stream and a dihydrogen containing electrolyte stream;

- at least a recycle pipe (52, 66, 68) recirculating the dioxygen containing electrolyte stream and the dihydrogen containing electrolyte stream to form at least part of the electrolyte containing water introduced in the electrolyzer stack device (20),

**characterized by** a controller (122) configured to, upon detection of conditions susceptible of leading to a dioxygen to dihydrogen ratio greater than a OTH safety threshold in electrolyte circulating in the or each cathodic compartment (19A) or/and to a dihydrogen to dioxygen ratio greater than a safety HTO threshold in electrolyte circulating in the or each anodic compartment (19B), activate a flushing of dihydrogen in electrolyte fed to the or each cathodic compartment (19A) and/or activate a flushing of dioxygen in electrolyte fed to the or each anodic compartment (19B).

15. The water electrolysis installation according to claim 14, comprising a dihydrogen flushing circuit (90) controlled by the controller (122), the dihydrogen flushing circuit (90) being tapped downstream of the dihydrogen separator (49) and configured to inject a part of the dihydrogen stream in the electrolyte to be fed to the or each cathodic compartment (19A), and/or an dioxygen flushing circuit (92) controlled by the controller (122), the dioxygen flushing circuit (92) being tapped downstream of the dioxygen separator (60) and configured to inject a part of the dioxygen stream in the electrolyte to be fed to the or each anodic compartment (19B).

EP 4 650 487 A1

FIG.1

FIG.2

FIG.3

FIG.4

Europäisches
Patentamt

European
Patent Office

Office européen
des brevets

## EUROPEAN SEARCH REPORT

**Application Number**

EP 24 30 5757

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 137 608 A1 (INDUSTRIE DE NORA SPA [IT]) 22 February 2023 (2023-02-22) <br> * abstract * * <br> * figures 1, 2 * <br> * paragraphs [0002], [0019], [0028] – [0036] * <br> ----- | 1-15 | INV. <br> C25B1/04 <br> C25B15/029 <br> C25B15/08 |

**TECHNICAL FIELDS SEARCHED (IPC)**

C25B

The present search report has been drawn up for all claims

| Place of search | Date of completion of the search | Examiner |
|---|---|---|
| The Hague | 5 December 2024 | Lange, Ronny |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 30 5757

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2024

| Patent document cited in search report | | Publication date | Patent family member(s) | | Publication date |
|---|---|---|---|---|---|
| EP 4137608 | A1 | 22-02-2023 | AU | 2022329382 A1 | 29-02-2024 |
| | | | CA | 3228725 A1 | 23-02-2023 |
| | | | CL | 2024000448 A1 | 02-08-2024 |
| | | | CN | 117999377 A | 07-05-2024 |
| | | | EP | 4137608 A1 | 22-02-2023 |
| | | | EP | 4370730 A1 | 22-05-2024 |
| | | | IL | 310734 A | 01-04-2024 |
| | | | JP | 2024531391 A | 29-08-2024 |
| | | | KR | 20240039225 A | 26-03-2024 |
| | | | TW | 202323592 A | 16-06-2023 |
| | | | US | 2024344220 A1 | 17-10-2024 |
| | | | WO | 2023021034 A1 | 23-02-2023 |

EPO FORM P0459

For more details about this annex : see Official Journal of the European Patent Office, No. 12/82